# EUROPÄISCHE PATENTSCHRIFT

(11) **EP 1 069 431 B1**
(45) Veröffentlichungstag und Bekanntmachung des Hinweises auf die Patenterteilung: **10.12.2003**
(21) Anmeldenummer: 00114854.3
(22) Anmeldetag: 11.07.2000
(51) Int. Cl.: G01N 33/48, G01N 1/28, G01N 1/31

(54) **Vorrichtung zur Bindung von Molekülen oder Zellen**
Device for binding molecules or cells
Dispositif pour lier des molécules ou des cellules

(30) Priorität: 14.07.1999 DE 19932958
(43) Veröffentlichungstag der Anmeldung: 17.01.2001
(73) Patentinhaber: Schubert, Walter, Dr., 39175 Biederitz (DE)
(72) Erfinder: Schubert, Walter, Dr., 39175 Biederitz (DE)
(74) Vertreter: Hofstetter, Alfons J., Dr.rer.nat.

(56) Entgegenhaltungen:
- EP-A- 0 843 169
- WO-A-91/07486
- WO-A-93/19207
- WO-A-94/18539
- WO-A-96/30124
- DD-A- 224 119
- DE-A- 19 709 348
- STAMPER H B ET AL: "LYMPHOCYTE HOMING INTO LYMPH NODES: IN VITRO DEMONSTRATION OF THE SELECTIVE AFFINITY OF RECIRCULATING LYMPHOCYTES FOR HIGH-ENDOTHELIAL VENULES" JOURNAL OF EXPERIMENTAL MEDICINE,TOKYO,JP, Bd. 144, 1976, Seiten 828-833, XP000950054 ISSN: 0022-1007

## Beschreibung

Die Erfindung betrifft eine Vorrichtung zur Bindung von Molekülen, Molekülgruppen, Molekülteilen und/oder Zellen in einer Flüssigkeit an Zielstrukturen, bestehend aus mindestens einem Objektträger mit mindestens einer fixierten Zielstruktur, die mit jeweils mindestens einem Kanal in Berührung steht, der durch mindestens einen Werkstoff gebildet wird, wobei der Kanal eine Flüssigkeitszufuhr an einer ersten Kanalöffnung und einen Flüssigkeitsauslaß an einer zweiten Kanalöffnung aufweist und jeweils mindestens ein Objektträger-Thermostat, mit dem der jeweilige Objektträger kühlbar ist, ausgebildet ist.

Eine derartige Vorrichtung ist aus der WO 96 30124 A bekannt.

Bisher ist lediglich eine Methode zur Bindung von Molekülen, Molekülgruppen, Molekülteilen und/oder Zellen in einer Flüssigkeit an Zielstrukturen nach "Stamper and Woodruff (1976) *J*. *Exp*. *Med*. 144, 828-833" bekannt. Danach werden Zielstrukturen auf einer Oberfläche fixiert und rehydriert. Es folgt eine Beschichtung der Zielstrukturen mit 100 bis 200 µl der Flüssigkeit, die Moleküle, Molekülgruppen, Molekülteile und/oder Zellen enthält. Nach einer Inkubation (z. B.: 30 min, 7°C) auf einem Schüttler oder rotierenden Tisch, erfolgt ein Waschschritt, durch den die nicht-bindenden Materialien entfernt werden.

Nachteilig ist vor allem die manuelle Durchführung der Methode. Außerdem nachteilig ist, daß für die Einstellung des Bindungsgleichgewichtes Bewegungsvorrichtungen vorgesehen sind, die die Gegebenheiten in bestimmten natürlichen Systemen nur schlecht simulieren. Ein weiterer Nachteil ist, daß durch den Waschschritt die oft sehr schwache Bindung zwischen Bestandteilen der Flüssigkeit und den Zielstrukturen zerstört werden kann. Außerdem nachteilig ist, daß metabolische Prozesse nicht unterbunden werden können.

Demgemäss ist es die Aufgabe der Erfindung, eine Vorrichtung bereitzustellen, durch die kurzzeitige Interaktionen von Molekülen, Molekülgruppen, Molekülteilen und/oder Zellen in einer Flüssigkeit mit den Zielstrukturen simuliert werden und dabei gewährleistet ist, daß metabolische Prozesse zu einem beliebigen Zeitpunkt weitgehend unterbunden werden können und gleichzeitig die Situation in einem natürlichen Kapillarbett simuliert wird.

Gelöst wird diese Aufgabe durch eine Vorrichtung gemäß den Merkmalen des unabhängigen Anspruchs 1.

Vorteilhafte Ausgestaltungen sind in den Unteransprüchen beschrieben.

Eine erfindungsgemäße Vorrichtung zur Bindung von Molekülen, Molekülgruppen, Molekülteilen und/oder Zellen in einer Flüssigkeit an Zielstrukturen weist einen Kanal auf, der durch einen Objektträger und darauf aufgebrachtem paraffinartigen Folienmaterial gebildet wird. Dadurch wird eine Ausdehnung des Kanals ermöglicht, die einen zu hohen Druck innerhalb des Kanals verhindert und zudem die Situation in einem natürlichen Kapillarbett simuliert. Dem liegt die Erkenntnis zugrunde, daß der Fluß einer Flüssigkeit, die Moleküle, Molekülgruppen, Molekülteile und/oder Zellen enthält, durch einen Kanal, der mit einer Zielstruktur in Berührung steht, zur Bindung der Moleküle, Molekülgruppen, Molekülteile und/oder Zellen an die Zielstruktur führt. Das nicht-bindende Material kann durch die zweite Kanalöffnung entfernt werden. Gleichzeitig wird die Temperatur des Objektträgers durch den Objektträger-Thermostat geregelt. Die Fließbewegung der Flüssigkeit, die Moleküle, Molekülgruppen, Molekülteile und/oder Zellen enthält, über die Zielstruktur simuliert natürliche Systeme mit kurzzeitiger Interaktion besser als dies durch einen bekannten Schüttler oder einen bekannten rotierenden Tisch möglich ist: Besonders vorteilhaft ist, daß metabolische Prozesse durch eine Erniedrigung der Objektträger-Temperatur zu jedem Zeitpunkt mit Hilfe des Objektträger-Thermostaten unterbunden werden können. Die Temperatur des Objektträgers beträgt dabei 2-10°C, insbesondere 4°C.

Eine weitere vorteilhafte Weiterbildung der Erfindung sieht vor, daß die ausgelassene Flüssigkeit in einem Gefäß sammelbar ist, wodurch der Verlust der bereits durch den Kanal geflossenen Flüssigkeit verhindert wird, die möglicherweise aufwendig und/oder kostspielig präpariert werden muss.

Eine andere vorteilhafte Weiterbildung der Erfindung sieht-vor, daß die Temperatur des Gefäßes durch einen Gefäßthermostat kühlbar ist, wodurch metabolische Prozesse innerhalb des Gefäßes verhindert werden und so eine weitere Verwendung der Flüssigkeit oder ihrer Bestandteile ermöglicht wird.

Verwendung findet die erfindungsgemäße Vorrichtung unter anderem in einem automatisierten Verfahren zur Bestimmung von Molekülklassen, Molekülgruppen, Molekülteilen in einem festen oder flüssigen Objekt gemäß der DE 197 09 348 C2 vor. Dadurch wird eine Identifizierung und Charakterisierung der Bindungspartner ermöglicht. Gleichzeitig können auf diese Weise auch die für die Bindung notwendigen Molekülklassen, Molekülgruppen und/oder Molekülteile identifiziert und charakterisiert werden. Diese Anwendung ist für zahlreiche Gebiete der Chemie, der Biologie, der Biochemie und insbesondere der Medizin vorteilhaft. Es werden dadurch nicht nur neue diagnostische Möglichkeiten eröffnet, sondern auch ein Testsystem für molekulare therapeutische Ansätze bereitgestellt.

Weitere Einzelheiten, Merkmale und Vorteile der Erfindung ergeben sich aus der folgenden Beschreibung eines zeichnerisch dargestellten Ausführungsbeispiels. Es zeigen:
- Figur 1a: eine Aufsicht auf einen Objektträger der erfindungsgemäßen Vorrichtung;
- Figur 1b: einen Querschnitt durch den Objektträger gemäß Figur 1 a;
- Figur 2a: eine schematisch dargestellte Seitenansicht der erfindungsgemäßen Vorrichtung; und
- Figur 2b: eine Detaildarstellung eines Elementes der erfindungsgemäßen Vorrichtung.

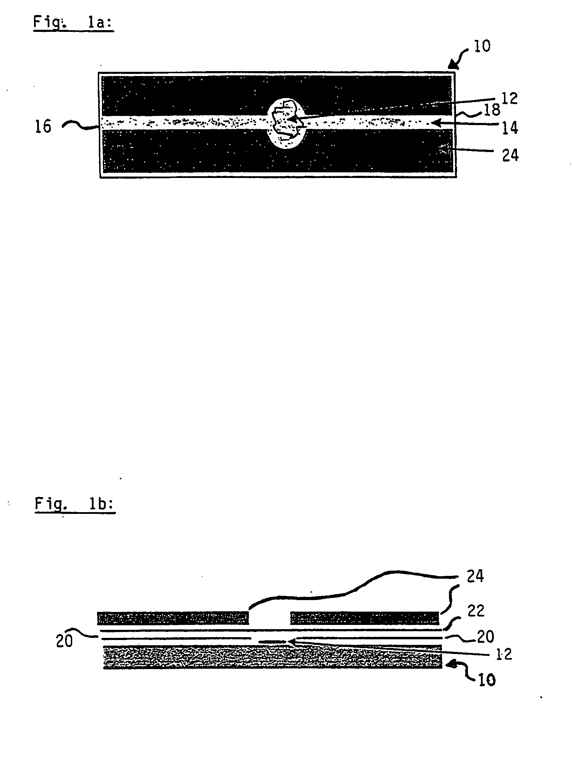

**Figur 1a** stellt eine Aufsicht auf einen Objektträger 10 der Vorrichtung zur Bindung von Molekülen, Molekülgruppen, Molekülteilen und/oder Zellen dar, während in **Figur 1b** der Querschnitt durch den Objektträger 10 dargestellt ist.

Man erkennt, daß auf dem Objektträger 10 eine Zielstruktur 12 lösbar befestigt ist, die mit einem Kanal 14 in Berührung steht, der durch den Objekträger 10, zwei Parafilmstreifen 20 und eine durchgehende Parafilmschicht 22 eingeschlossen wird. Auf der Parafilmschicht 22 sind zwei Aluminiumschienen 24 angebracht, die eine vergleichbare Fläche wie die darunterliegenden Parafilmstreifen 20 aufweisen. Des weiteren erkennt man, daß der Kanal 14 eine erste und zweite Kanalöffnung 16,18 für die Zufuhr und den Auslaß der Flüssigkeit 62 aufweist. Die Flüssigkeit 62 ist dabei durch einen Stempelmechanismus 58, eine Pumpe (nicht dargestellt) oder durch Wirkung der Schwerkraft zuführbar und durch eine Pumpe (nicht dargestellt) oder durch die Wirkung der Schwerkraft auslaßbar.

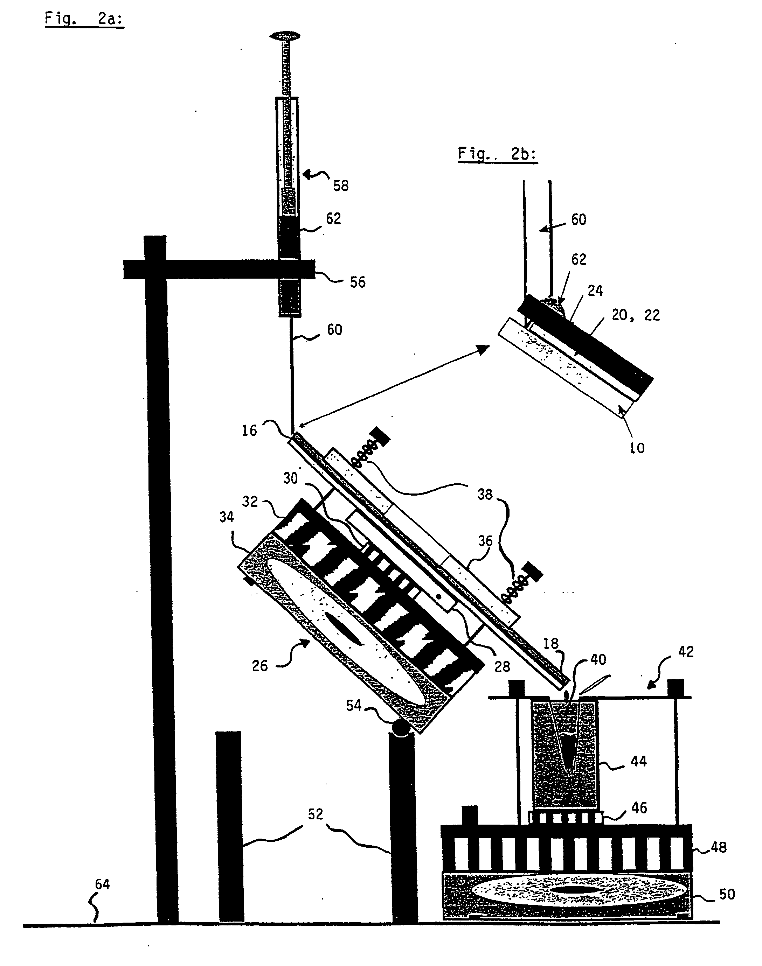

**Figur 2a** zeigt eine schematische Seitenansicht der Vorrichtung zur Bindung von Molekülen, Molekülgruppen, Molekülteilen und/oder Zellen, wobei der Objektträger 10 mit Parafilmstreifen 20, Parafilmschicht 22, Aluminiumschienen 24, einer Kanüle 60 und der Flüssigkeit 62 zusätzlich in **Figur 2b** detailliert dargestellt ist.

Man erkennt, daß die Vorrichtung neben den oben genannten Elementen einen Objektträger-Thermostat 26 bestehend aus einer Kühlplatte 28 aus Aluminium, einem ersten Peltier-Element 30, einem ersten Kühlkörper 32 und einem ersten Lüfter 34 aufweist Sie ist dabei auf einem Pfosten 52 mit Klemmgelenk 54 so angebracht, daß der befestigte Objektträger 10 mit einer Grundplatte 64 einen Winkel von ca. 20-70° einschließt. Der Objektträger 10 wird durch eine Andruckplatte mit zentraler Öffnung 36, die auf den Aluminiumschienen 24 aufliegt, auf den Objektträger-Thermostaten 26 gedrückt. Ein ausreichender Druck wird durch die Federn 38 gewährleistet.

Die Flüssigkeit 62 wird mit Hilfe einer Spritze 58, die durch einen Spritzenhalter 56 lösbar befestigt ist, und einer Kanüle in die erste Kanalöffnung 16 eingeführt. Die Flüssigkeit 62 durchfließt so den Kanal 14 aufgrund der angreifenden Schwerkraft und kommt folglich mit der Zielstruktur 12 in Berührung, wodurch eine Bindung der gewünschten und vorbestimmten Bestandteile der Flüssigkeit 62 an die Zielstruktur 12 erfolgen kann. Die Flüssigkeit 62 gelangt schließlich zu der zweiten Kanalöffnung 18, verläßt den Kanal 14 und tropft in ein Gefäß 40, welches von einem Gefäßthermostaten 42 umgeben ist. Der Gefäßthermostat 42 besteht aus einer Gefäßhalterung 44 aus Kupfer, einem zweiten Peltier-Element 46, einem zweiten Kühlkörper 48 und einem zweiten Lüfter 50.

Nachdem die gesamte Flüssigkeit 62 (ca. 1 ml) durch den Kanal 14 geflossen ist, werden Gefäß 40 und Objekträger 10 mittels des Objekträger-Thermostats 26 und dem Gefäßthermostat 42 auf 4°C abgekühlt, um jegliche metabolische Aktivität zu stoppen.

Die Flüssigkeit 62 kann Lymphozyten enthalten. Die Zielstruktur 12 besteht aus einem Gewebeschnitt oder aus einer mit Molekülen oder Molekülkombination beschichteten Membran.

## Patentansprüche

1. Vorrichtung zur Bindung von Molekülen, Molekülgruppen, Molekülteilen und/oder Zellen in einer Flüssigkeit (62) an Zielstrukturen (12), bestehend aus mindestens einem Objektträger (10) mit mindestens einer fixierten Zielstruktur (12), die mit jeweils mindestens einem Kanal (14) in Berührung steht, der durch mindestens einen Werkstoff gebildet wird, wobei der Kanal (14) eine Flüssigkeitszufuhr an einer ersten Kanalöffnung (16) und einen Flüssigkeitsauslaß an einer zweiten Kanalöffnung (18) aufweist und jeweils mindestens ein Objektträger-Thermostat (26), mit dem der jeweilige Objektträger (10) kühlbar ist, ausgebildet ist,
**dadurch gekennzeichnet,**
**daß** der Kanal (14) durch den Objektträger (10) und darauf aufgebrachtes paraffinartiges Folienmaterial (20, 22) gebildet wird.

2. Vorrichtung nach Anspruch 1,
**dadurch gekennzeichnet,**
**daß** die Flüssigkeit (62) durch einen Stempelmechanismus (58), eine Pumpe oder durch Wirkung der Schwerkraft zuführbar ist.

3. Vorrichtung nach einem der vorhergehenden Ansprüche,
**dadurch gekennzeichnet,**
**daß** die Flüssigkeit (62) durch eine Pumpe oder durch die Wirkung der Schwerkraft auslaßbar ist.

4. Vorrichtung nach einem der vorhergehenden Ansprüche,
**dadurch gekennzeichnet,**
**daß** die Temperatur des Objektträgers (10) durch den Objektträger-Thermostat (26) auf 2-10°C kühlbar ist.

5. Vorrichtung nach einem der vorhergehenden Ansprüche,
**dadurch gekennzeichnet,**
**daß** der Objektträger-Thermostat (26) ein erstes Peltier-Element (30) aufweist.

6. Vorrichtung nach einem der vorhergehenden Ansprüche,
**dadurch gekennzeichnet,**
**daß** die ausgelassene Flüssigkeit (62) in einem Gefäß (40) sammelbar ist.

7. Vorrichtung nach Anspruch 6,
**dadurch gekennzeichnet,**
**daß** die Temperatur des Gefäßes (40) durch einen Gefäßthermostat (42) kühlbar ist.

8. Vorrichtung nach Anspruch 7,
**dadurch gekennzeichnet,**
**daß** die Temperatur des Gefäßes (40) durch einen Gefäßthermostat (42) auf 2-10°C kühlbar ist.

9. Vorrichtung nach Anspruch 6 oder 7,
**dadurch gekennzeichnet,**
**daß** der Gefäßthermostat (42) ein zweites Peltier-Element (46) aufweist.

10. Vorrichtung nach einem der vorhergehenden Ansprüche,
**dadurch gekennzeichnet,**
**daß** die Flüssigkeit (62) Lymphozyten enthält.

11. Vorrichtung nach einem der vorhergehenden Ansprüche,
**dadurch gekennzeichnet,**
**daß** die Zielstruktur (12) aus einem Gewebeschnitt oder aus einer mit Molekülen oder Molekülkombination beschichteten Membran besteht.

## Claims

1. A device for binding molecules, molecular groups, molecular parts and/or cells contained in a liquid (62) to target structures (12), comprising at least one object holder (10) with at least one fixed target structure (12) which contacts at least one corresponding duct (14) made of at least one material, said duct (14) including a liquid inlet at a first aperture (16) thereof, and a liquid outlet at a second aperture (18) thereof, and at least one object holder thermostat (26) used for cooling the corresponding object holder (10) **characterized in that** the duct (14) is formed by said object holder (10) and paraffin-like sheet material (20, 22) applied thereon.

2. The device as claimed in claim 1 **characterized in that** said liquid (62) can be introduced by means of a plunger mechanism (58), a pump or under the influence of gravity.

3. The device as claimed in any of the preceding claims **characterized in that** said liquid (62) can be discharged by means of a pump or under the influence of gravity.

4. The device as claimed in any of the preceding claims **characterized in that** the temperature of said object holder (10) can be cooled down to 2-10°C by means of the object holder thermostat (26).

5. The device as claimed in any of the preceding claims **characterized in that** the object holder thermostat (26) includes a first Peltier element (30).

6. The device as claimed in any of the preceding claims **characterized in that** the discharged liquid (62) can be collected in a vessel (40).

7. The device as claimed in claim 6 **characterized in that** the temperature of said vessel (40) can be cooled down by means of a vessel thermostat (42).

8. The device as claimed in claim 7 **characterized in that** a vessel thermostat (42) allows the temperature of said vessel (40) to be cooled down to 2-10°C.

9. The device as claimed in claim 6 or 7 **characterized in that** said vessel thermostat (42) includes a second Peltier element (46).

10. The device as claimed in any of the preceding claims **characterized in that** said liquid (62) contains lymphocytes.

11. The device as claimed in any of the preceding claims **characterized in that** said target structure (12) is a tissue section or a membrane coated with molecules or molecular combination.

## Revendications

1. Dispositif de liaison de molécules, de groupes de molécules, fractions de molécules et/ou de cellules dans un liquide (62) à des structures cibles (12), comportant au moins un porteur d'objets (10) comprenant au moins une structure cible fixée (12) en contact avec au moins un passage (14) constitué par au moins une matière, le passage (14) présentant, à une première ouverture (16) du passage, une amenée de liquide, et, à une seconde ouverture (18) du passage, une sortie de liquide, au moins un thermostat de porteur d'objets (26) étant prévu chacun, permettant de refroidir le porteur d'objets (10) correspondant,
**caractérisé en ce que**
le passage (14) est défini par le porteur d'objets (10) et par de la feuille paraffinique (20, 22) déposée sur celui-ci.

2. Dispositif selon la revendication 1,
**caractérisé en ce que**
le liquide (62) peut être alimenté à l'aide soit d'un mécanisme de poinçon (58), soit d'une pompe ou soit par effet de la force de pesanteur.

3. Dispositif selon l'une des revendications précédentes,
**caractérisé en ce que**
le liquide (62) peut être évacué à l'aide d'une pompe ou par effet de la force de pesanteur.

4. Dispositif selon l'une des revendications précédentes,
**caractérisé en ce que**
la température du porteur d'objets (10) peut être réduite jusqu'à 2 à 10°C, grâce au thermostat du porteur d'objets (26).

5. Dispositif selon l'une des revendications précédentes,
**caractérisé en ce que**
le thermostat du porteur d'objets (26) comporte un premier élément Peltier (30).

6. Dispositif selon l'une des revendications précédentes,
**caractérisé en ce que**
le liquide évacué (62) est susceptible d'être récupéré dans un récipient (40).

7. Dispositif selon la revendication 6,
**caractérisé en ce que**
la température du récipient (40) peut être réduite à l'aide d'un thermostat du récipient (42).

8. Dispositif selon la revendication 7,
**caractérisé en ce que**
la température du récipient (40) peut être réduite à 2 à 10°C à l'aide d'un thermostat du récipient (42).

9. Dispositif selon la revendication 6 ou 7,
**caractérisé en ce que**
le thermostat du récipient (42) comporte un deuxième élément Peltier (46).

10. Dispositif selon l'une des revendications précédentes,
**caractérisé en ce que**
le liquide (62) contient des lymphocytes.

11. Dispositif selon l'une des revendications précédentes,
**caractérisé en ce que**
la structure cible (12) est constituée soit par un flan de tissu soit par une membrane enduite de molécules ou d'une combinaison de molécules.
